# EUROPÄISCHE PATENTSCHRIFT

(11) **EP 1 651 474 B1**
(45) Veröffentlichungstag und Bekanntmachung des Hinweises auf die Patenterteilung: **14.09.2011**
(21) Anmeldenummer: 04738892.1
(22) Anmeldetag: 08.07.2004
(51) Int. Cl.: B60R 21/01

(54) **VORRICHTUNG ZUR BETÄTIGUNG EINER AKTUATORIK ZUM SCHUTZ EINES FUSSGÄNGERS**
DEVICE FOR ACTUATING AN ACTUATION SYSTEM FOR PROTECTING A PEDESTRIAN
DISPOSITIF POUR ACTIONNER UN SYSTEME D'ACTIONNEMENT SERVANT A PROTEGER UN PIETON

(30) Priorität: 30.07.2003 DE 10334699
(43) Veröffentlichungstag der Anmeldung: 03.05.2006
(73) Patentinhaber: ROBERT BOSCH GMBH, 70442 Stuttgart (DE)
(72) Erfinder: THEISEN, Marc, 74354 Besigheim (DE)
(86) Internationale Anmeldenummer: PCT/DE2004/001476
(87) Internationale Veröffentlichungsnummer: WO 2005/012045

(56) Entgegenhaltungen:
- EP-A- 0 937 612
- WO-A-01/34438
- DE-A- 10 252 227
- DE-C- 10 140 119
- GB-A- 2 376 118
- US-A- 4 549 181
- US-A1- 2002 188 393
- US-B1- 6 516 278

## Beschreibung

### Stand der Technik

Die Erfindung geht aus von einer Vorrichtung zur Betätigung einer Aktuatorik zum Schutz eines Fußgängers nach der Gattung des unabhängigen Patentanspruchs.

Aus EP 914 992 A 1 ist es bekannt, bei einem Fußgängerschutzsystem, hier einer einstellbaren Fronthaube, die Eigengeschwindigkeit des Fahrzeugs beim Betätigen der Fronthaube zu berücksichtigen.

Aus EP 0 937 612 A2 ist eine Vorrichtung zur Unterscheidung von Kollisionen für Fahrzeuge vorgesehen, bei dem Sensoren in der vorderen Stoßstange angeordnet sind. Die Kollision wird beurteilt anhand des deformierten Wertes der betroffenen Fahrzeugregion und der Fahrzeuggeschwindigkeit. Aus US 6, 516, 278 B1 ist ein System zum Betrieb einer Fronthaube bekannt, bei dem diese Fronthaube zum Fußgängerschutz in Abhängigkeit von einem Beschleunigungssignal und der Fahrzeugeigengeschwindigkeit betätigt wird.

### Vorteile der Erfindung

Der erfindungsgemäße Vorrichtung zur Betätigung einer Aktuatorik zum Schutz eines Fußgängers mit den Merkmalen des unabhängigen Patentanspruchs hat demgegenüber den Vorteil, dass der Algorithmus, der zur Betätigung der Aktuatorik verwendet wird, Signale von einer Umfeldsensorik und einer Kontaktsensorik verwendet. Vorteilhafterweise wird das Signal der Kontaktsensorik mit einer Schwelle verglichen, wobei entweder das Signal der Kontaktsensorik oder die Schwelle in Abhängigkeit von dem Signal der Umfeldsensorik verändert wird. Damit wird der Einfluss der Relativgeschwindigkeit bei der Auswertung des Signals von der Kontaktsensorik berücksichtigt werden. Die Relativgeschwindigkeit ist ein Maß zur Objektklassifikation, damit kann beispielsweise festgestellt werden, ob es sich um ein ruhendes Objekt handelt oder ob es sich mit einer bestimmten Geschwindigkeit bewegt. Da Fußgänger nur eine begrenzte Maximalgeschwindigkeit haben, werden somit leicht Fußgänger von Fahrzeugen unterschieden werden. Dies kann dann insbesondere auch zur Berücksichtigung der Unfallschwere verwendet werden. Damit ist es also möglich, dass die erfindungsgemäße Vorrichtung in der Lage ist, geschwindigkeitsbasiert eine Auslöseentscheidung für die Aktuatorik zu treffen. Unter der Zuhilfenahme von Geschwindigkeitsinformationen kann das Aufprallsignal dahingehend besser differenziert werden, ob es sich um eine Person oder um ein anderes Objekt handelt. Die Hinzunahme der Geschwindigkeit hilft also eine Fehlauslösung der Aktuatorik zu verhindern. Insgesamt wird damit das Aufprallsignal, das ist das Signal von der Kontaktsensorik, präziser ausgewertet. Beispielsweise kann eine schnelles leichtes Objekt ein ähnliches Aufprallsignal wie ein langsames schweres Objekt liefern. Dies zeigt, dass die Kenntnis der Geschwindigkeit den Entscheidungsraum um eine Dimension erweitert, so dass eine Klassifikation der verschiedenen Objekte verbessert wird und damit auch die Entscheidung zur Auslösung der Aktuatorik.

Weiterhin ist es erfindungsgemäß, dass die Schwelle auch in Abhängigkeit von der Zeit verändert wird. Wird beispielsweise in einem Zeitfenster die Schwelle nicht überschritten, dann wird erkannt, dass das Signal von der Kontaktsensorik vermutlich keinen Aufprall anzeigt. Damit kann dann die Schwelle wieder angehoben werden, um zu vermeiden, dass durch andere Effekte als einen Aufprall die Schwelle überschritten wird.

Durch die in den abhängigen Ansprüchen aufgeführten Maßnahmen und Weiterbildungen sind vorteilhafte Verbesserungen der im unabhängigen Patentanspruch angegebenen Vorrichtung zur Betätigung einer Aktuatorik zum Schutz eines Fußgängers möglich.

Besonders vorteilhaft ist, dass das Signal der Kontaktsensorik, also das Aufprallsignal, zunächst mit einer Rauschschwelle verglichen wird, um festzulegen, wann der Vergleich mit der Schwelle zur Bildung der Auslöseentscheidung für die Aktuatorik gestartet werden soll. In einer Weiterbildung ist vorgesehen, dass die Rauschschwelle in Abhängigkeit von einem Signal der Umfeldsensorik verändert wird. Dies ist dann der Fall, wenn durch die Umfeldsensorik ein Aufprall als mit hoher Wahrscheinlichkeit oder gar als unvermeidlich erkannt wird. Dann kann beispielsweise die Rauschschwelle abgesenkt werden, so dass der Algorithmus sensibler auf den Beginn des Crashs reagieren kann. Dadurch kann näher an dem tatsächlichen Crashkontaktzeitpunkt mit der Signalverarbeitung begonnen werden.

Weiterhin ist es von Vorteil, dass die Vorrichtung aus einem weiteren Signal der Umfeldsensorik den Startpunkt für den Vergleich des Aufprallsignals mit der Schwelle bestimmt. Aus den Signalen der Umfeldsensorik kann nämlich der Zeitpunkt des Aufpralls bestimmt werden. Dieser Zeitpunkt bestimmt dann, wann die Vorrichtung beginnt, den Vergleich des Signals von der Kontaktsensorik mit der Schwelle durchzuführen.

Das Signal von der Kontaktsensorik kann in vorteilhafter Weise entweder selbst für den Vergleich herangezogen werden, oder es kann in einer vorverarbeiteten Version benutzt werden, d.h. es kann vor dem Vergleich differenziert oder integriert werden, um beispielsweise bei der Integration das Signal zu glätten oder um beim Differenzieren Signaleigenschaften besser auswerten zu können. Das Differenzieren oder die Integration kann mehrfach ausgeführt werden.

### Zeichnung

Ausführungsbeispiele der Erfindung sind in der Zeichnung dargestellt und werden in der nachfolgenden Beschreibung näher erläutert.

### Es zeigen

Figur 1 sein erstes Blockschaltbild der erfindungsgemäßen Vorrichtung,
Figur 2 ein Signalflussdiagramm,
Figur 3 ein Flussdiagramm,
Figur 4 ein erstes Signalzeitdiagramm,
Figur 5 ein zweites Signalzeitdiagramm und
Figur 6 ein drittes Signalzeitdiagramm.

### Beschreibung

Bei Fahrzeugen der heutigen Generation wird ein Fußgänger bei einem Unfall mit einem Fahrzeug lediglich dadurch geschützt, dass konstruktive Maßnahmen an der Fahrzeugfront getroffen werden. Ein Beispiel dafür ist, dass die Fronthaube der Kotflügel oder die Windschutzscheibe derart konstruiert werden, dass die Belastungswerte für den Fußgänger möglichst niedrig sind. Die Fronthaube erhält daher beispielsweise einen größeren Abstand vom Motorblock und kann somit weicher konzipiert werden.

Diese konstruktiven Maßnahmen können aber z. B. aus designtechnischen Gründen nicht in allen Fällen umgesetzt werden und sind nicht immer ausreichend. In diesen Fällen muss ein elektronisches System eingesetzt werden, das eine Aktuatorik steuert, die einen erhöhten Fußgängerschutz bietet. Ein Beispiel dafür ist eine aufstellbare Fronthaube. Im Allgemeinen besteht ein solches System aus Sensoren, einem Algorithmus und einem Steuergerät, in dem der Algorithmus abläuft, der die Auslöseentscheidung berechnet. Als Steuergerät kann beispielsweise das Steuergerät für Rückhaltesysteme verwendet werden, so dass auf dem Prozessor dieses Steuergeräts der Algorithmus berechnet wird.

Erfindungsgemäß wird vorgeschlagen, im Algorithmus die Geschwindigkeit zwischen dem Fahrzeug und dem Objekt, d. h. im besonderen einen Fußgänger, zu berücksichtigen, um aus dem Aufprallsignal, also dem Signal einer Kontaktsensorik präzise auf das aufprallende Objekt schließen zu können.

Ein Ziel des für den Fußgängerschutz eingesetzten Sensorsystems muss es sein, die Geschwindigkeit zwischen Fahrzeug und Fußgänger bzw. im Allgemeinen dem aufprallenden Objekt zu messen. Die Geschwindigkeit kann beispielsweise über eine Pre-Crash-Sensorik wie eine Radar- oder Ultraschallsensorik erfasst werden. Weitere Beispiele sind eine Videosensorik, ein Photonic Mixing Device oder ein Laser oder ein Infrarotsensor. Mittels dieser Pre-Crash-Sensorik kann auch auf den Zeitpunkt des Aufpralls des Objekts oder der Person geschlossen werden, also den Zeitpunkt, ab dem die Verarbeitung des Signals beginnen sollte. Ein weiteres Ziel des Sensorsystems muss es sein, dem Algorithmus die Information zur Verfügung zu stellen, um zwischen einem Objekt zu unterscheiden, für welches das Fußgängerschutzsystem ausgelöst bzw. nicht ausgelöst werden soll. Hierzu wird der Kontaktsensor eingesetzt. Umfeld und Kontaktsensorik liefern dann dem Algorithmus die Informationen, um zu entscheiden, ob das Fußgängerschutzsystem aktiviert werden soll oder nicht.

Der Kontaktsensor liefert dabei ein Aufprallsignal, das umso stärker ist, desto schneller und schwerer das aufprallende Objekt ist, bzw. der Kontaktsensor liefert ein Aufprallsignal, dass für ein schnelles, leichtes Objekt, ähnlich wie für einen langsames schweres Objekt ist. Dieses Beispiel zeigt, dass die Kenntnis der Aufprallgeschwindigkeit dem Algorithmus eine wesentliche Information liefert, um auf das Objekt schließen zu können, also um zu erkennen, ob es sich um eine Person handelt, für die das Schutzsystem ausgelöst werden soll, oder um ein anderes Objekt, für dass das System nicht aktiviert werden darf, um andere Nachteile für das Fahrzeug bzw. die Insassen zu vermeiden.

Um zwischen Auslösung bzw. Nichtauslösung zu differenzieren ist es beispielsweise möglich, das Aufprallsignal oder ein daraus mittels einer Signalvorverarbeitung abgeleitetes Signal, beispielsweise durch ein- oder mehrmaliges Differenzieren oder ein- oder mehrmalige Integration, mit einer Schwelle zu vergleichen. Aufgrund der Kenntnis der Relativgeschwindigkeit ist es nicht notwendig, dass die Schwelle von der Relativgeschwindigkeit unabhängig ist, sondern die Schwelle kann durch die Geschwindigkeit parametrisiert sein. Auch das Aufprallsignal, das Signal der Kontaktsensorik, kann derart parametrisiert werden. Falls diese Schwelle über- bzw. unterschritten wird, soll das Rückhaltemittel ausgelöst werden. Zusätzlich kann die Schwelle noch zeitabhängig sein. Ebenso ist es möglich, das Aufprallsignal oder das daraus abgeleitete Signal, selbst geschwindigkeits- oder zeitabhängig zu verändern, um es dann mit einer Schwelle zu vergleichen.

Der Vergleich mit der Schwelle beginnt entweder ab dem durch die Umfeldsensorik vorhergesagten Aufprallzeitpunkt oder ab dem Zeitpunkt, ab dem das Aufprallsignal eine applizierbare sehr niedrige Schwelle, die sogenannte Rauschwelle, überschritten hat. Diese Rauschschwelle selbst kann auch in Abhängigkeit der Relativgeschwindigkeit verändert werden oder auch in Abhängigkeit von dem vorhergesagten Aufprallzeitpunkt.

Eine mögliche Konkretisierung der hier beschriebenen Erfindung kann derart aussehen, dass aus dem Aufprallsignal der Kontaktsensorik der Gradient berechnet wird. Der Gradient bedeutet die Differenz zwischen der aktuellen Signalabtastung und der Signalabtastung vor einer gewissen Zeit, also beispielsweise vor 2 Millisekunden. Falls dieser Gradient größer als eine geschwindigkeitsabhängige Schwelle ist, wird der Aktuator für den Fußgängerschutz ausgelöst.

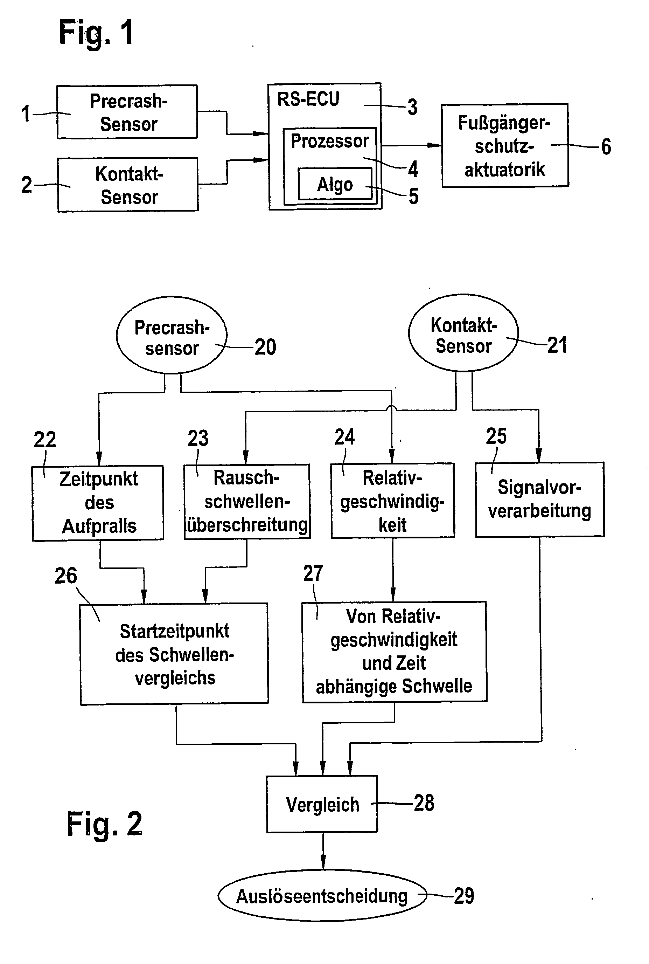

Figur 1 zeigt in einem Blockschaltbild die erfindungsgemäße Vorrichtung. Eine Umfeldsensorik 1, hier eine Kombination aus einer Radar- und Ultraschallsensorik, sowie eine Kontaktsensorik 2 sind über Datenleitungen an ein Airbagsteuergerät 3 angeschlossen. Im Airbagsteuergerät 3 ist ein Prozessor 4 angeordnet, auf dem wenigstens ein Algorithmus 5 abläuft. Der Algorithmus 5 ist hier zur Betätigung einer Fußgängerschutzaktuatorik 6 wie einer anstellbaren Fronthaube und/oder Außenairbags vorgesehen. Die Fußgängerschutzaktuatorik 6 ist hier allein dargestellt, während Rückhaltemittel, wie Innenairbags und Gurtstraffer, der Einfachheit halber hier weggelassen sind, ebenso andere Unfall- und Umfeldsensoren. Die Umfeld-Sensorik 1 weist hier eine Radar- und Ultraschallsensorik auf, da die Radarsensorik, insbesondere bei 77 GHz für größere Entfernungen sehr geeignet ist, während die Ultraschallsensorik für den Nahbereich geeignet ist. Alternativ sind auch Videosensoren, Laser- oder Infrarotsensoren oder ein Photonic Mixing Device möglich. Es ist auch möglich, einen Radarsensor oder einen Ultraschallsensor alleine zu verwenden. Die Bezeichnung Sensor betrifft hier auch Gruppen von Sensorelementen. Die Kontaktsensorik 2 kann hier eine Berührungssensorik wie eine Folie sein oder aber auch ein Piezokabel, das bereits über eine kapazitive Messung Aussagen über das Objekt treffen kann, wenn das Objekt noch nicht mit dem Fahrzeug zusammengeprallt ist. Auch andere Berührungssensoren wie Sensorleisten oder Lichtleitersensoren sind hier möglich. Der Algorithmus verarbeitet die Signale der Umfeldsensorik 1 und der Kontaktsensorik 2, um in Abhängigkeit von diesen Signalen die Fußgängerschutzaktuatorik 6 anzusteuern. Dabei wird das Signal der Kontaktsensorik mit einer Schwelle verglichen. In Abhängigkeit von dem Schwellwertvergleich wird die Fußgängerschutzaktuatorik 6 angesteuert. Die Schwelle oder das Signal der Kontaktsensorik 2 wird in Abhängigkeit vom Signal der Umfeld-Sensorik 1 verändert.

Figur 2 erläutert die verschiedenen Möglichkeiten, die mit den Signalen der Kontaktsensorik 2 und der Umfeld-Sensorik 1 möglich sind. Das Signal des Kontaktsensors 21 wird einmal einer Rauschschwellenüberschreitung 23 zugeführt, also ob das Signal der Kontaktsensorik 2 einen solchen Wert erreicht, der vermuten lässt, dass es sich um einen Aufprall und nicht um ein Rauschsignal handelt. Das Signal der Kontaktsensorik 21 kann auch einer Signalvorverarbeitung 25 zugeführt werden, in der dieses Signal beispielsweise einer einfachen oder mehrfachen Integration oder Differenziation zugeführt. Das Signal 20 der Umfeld-Sensorik kann dazu verwendet werden, den Zeitpunkt des Aufpralls 22 zu bestimmen, also in Abhängigkeit von der Entfernung und der Relativgeschwindigkeit. Die Relativgeschwindigkeit 24 selbst wird dazu verwendet, um in Abhängigkeit von der Relativgeschwindigkeit 24 die Schwelle 27 zu verändern. Die Schwelle 27 wird auch in Abhängigkeit von der Zeit, wie oben dargestellt, verändert. Der Startpunkt des Schwellwertvergleichs 26 kann entweder aus dem Aufprallzeitpunkt 22 oder aus der Rauschschwellenüberschreitung 23 bestimmt werden. Es ist möglich, das Signal 20 zur Einstellung der Rauschschwelle zu verwenden. Der Vergleich 28 führt dann zur Auslöseentscheidung 29. Üblicherweise wird dies durch eine Überschreitung der Schwelle festgestellt. Es ist jedoch auch möglich, beispielsweise bei negativen, Signalen dies bei einer Unterschreitung festzustellen.

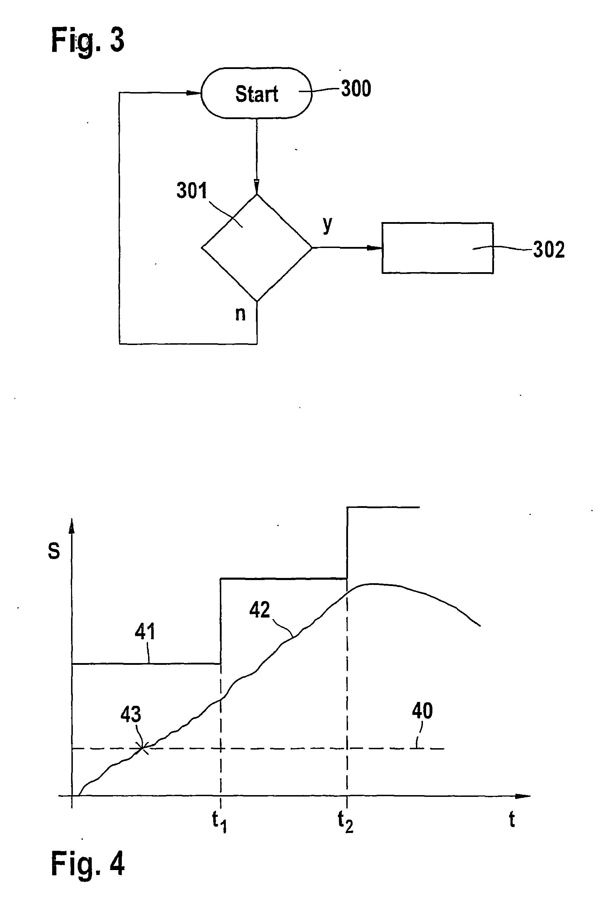

Figur 3 zeigt in einem Flussdiagramm den Ablauf des Algorithmus 5. In Verfahrensschritt 300 wird der Algorithmus 5 gestartet, entweder in Abhängigkeit von dem Signal der Umfeldsensorik berechneten Aufprallzeitpunkt oder wenn die Rauschschwelle überschritten wurde. In Verfahrensschritt 301 wird dann der Vergleich des Signals der Kontaktsensorik 2 mit der Schwelle durchgeführt. Die Schwelle oder das Signal der Kontaktsensorik 2 wird in Abhängigkeit von einem Signal der Umfeldsensorik 1 verändert. Dieses Signal ist vorzugsweise die Relativgeschwindigkeit. Kommt es zu einer Schwellwertüberschreitung bzw. zu einem Ergebnis des Vergleichs, der eine Betätigung der Aktuatorik zum Fußgängerschutz notwendig macht, dann wird zu Verfahrensschritt 302 gesprungen, um die Aktuatorik auszulösen. Kommt es nicht zu einem solchen Ergebnis des Vergleichs, wird zu Verfahrensschritt 300 zurückgesprungen, um festzustellen, ob der Algorithmus wieder gestartet wird.

In den Figuren 4 bis 6 werden beispielhafte Konstellationen für die Schwellwertvergleiche dargestellt. Auf der Abszisse ist jeweils die Zeit dargestellt, während auf der Ordinate mit S das Signal bezeichnet wird. Hier wird das Signal 42 der Kontaktsensorik 2 mit einer Schwelle 41 verglichen. Zunächst wird jedoch das Signal 42 mit einer Rauschschwelle 40 verglichen. Zum Zeitpunkt 43 wird die Rauschschwelle 40 überschritten, so dass ab hier der Algorithmus 5 startet. Zunächst ist die Schwelle 41 auf einem niedrigen Niveau, jedoch es kommt zu keiner Schwellwertüberschreitung bis zum Zeitpunkt t1. Daher wird zum Zeitpunkt t1 die Schwelle 41 um einen bestimmten Betrag angehoben. Da auch bis zum Zeitpunkt t2 das Signal 42 nicht die Schwelle 41 erreicht, kommt es zu einem weiteren Anheben der Schwelle 41. Dies zeigt, dass eine Auslösung verhindert wird, wenn das Signal 42 nicht schnell genug die Schwelle überschreitet. Das Anfangsniveau der Schwelle 41 wird in Abhängigkeit von der Relativgeschwindigkeit, die durch die Umfeldsensorik 1 ermittelt wurde, eingestellt. Auch die Rauschschwelle 40 kann in Abhängigkeit von einem Signal der Umfeldsensorik 1 eingestellt werden, beispielsweise über die Berechnung des Aufprallzeitpunkts.

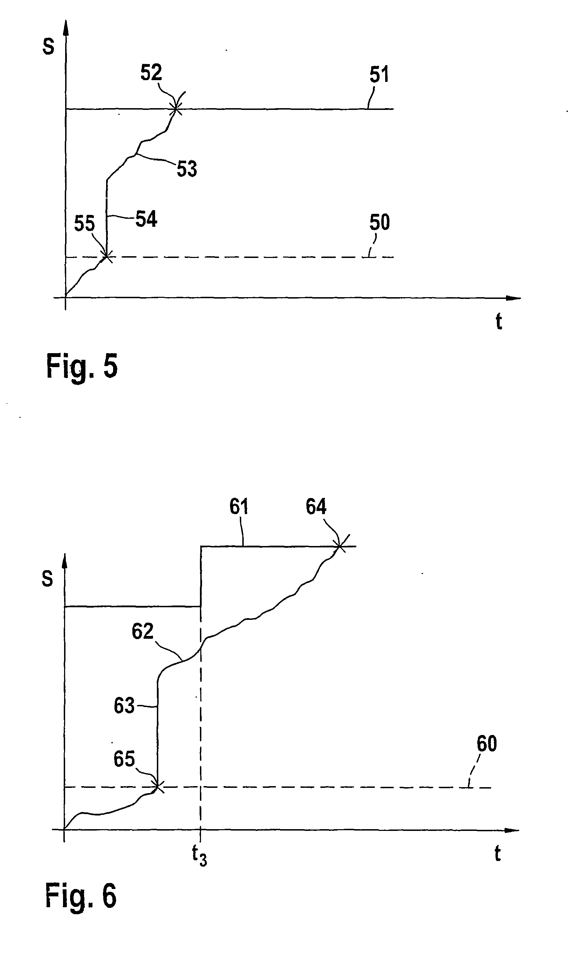

Figur 5 zeigt das Signal 53, das mit einer Schwelle 51 verglichen wird, die nur zeitvariant ist. Zum Zeitpunkt 55 überschreitet das Signal 53 die Rauschschwelle 50. Nun wird in Abhängigkeit von der Relativgeschwindigkeit ein Zuschlag auf das Signal 53 um den Betrag 54 gegeben. Zum Zeitpunkt 52 kommt es dann zu einem Überschreiten der Schwelle 51 und demnach zu einem Betätigen der Fußgängerschutzaktuatorik 6.

Figur 6 zeigt die Kombination eines veränderten Signals mit einer zeitabhängigen Schwelle. Die Schwelle wird vom Anfangsbetrag hier fest eingestellt oder sie kann auch in Abhängigkeit von der Relativgeschwindigkeit eingestellt werden. Zum Zeitpunkt 65 überschreitet das Signal 62 die Rauschschwelle 60. Sofort wird ein Zuschlag 63 in Abhängigkeit von der Relativgeschwindigkeit dem Signal 62 hinzugefügt. Dennoch erreicht das Signal 62 bis zum Zeitpunkt t3 nicht die Schwelle 61. Daher wird zum Zeitpunkt t3 die Schwelle 61 angehoben. Zum Zeitpunkt 64 erreicht dann endlich das Signal 62 die Schwelle 61, und es kommt zur Auslösung der Fußgängerschutzaktuatorik 6.

## Patentansprüche

1. Vorrichtung zur Betätigung einer Aktuatorik (6) zum Schutz eines Fußgängers, **dadurch gekennzeichnet, dass** die Vorrichtung mit einer Umfeldsensorik (1) und einer Kontaktsensorik (2) verbunden ist, wobei die Vorrichtung derart konfiguriert ist, dass die Vorrichtung ein erstes Signal von der Kontaktsensorik (2) mit einer Schwelle (27) vergleicht, wobei die Schwelle (27) oder das erste Signal in Abhängigkeit von einem zweiten Signal der Umfeldsensorik (1) verändert wird und wobei die Aktuatorik (6) in Abhängigkeit von dem Vergleich betätigt wird, dass das zweite Signal die Relativgeschwindigkeit ist, dass die Schwelle (27) in Abhängigkeit von der Zeit verändert wird.

2. Vorrichtung nach Anspruch 1, **dadurch gekennzeichnet, dass** die Vorrichtung das erste Signal mit einer Rauschschwelle vergleicht, um einen Startpunkt für den Vergleich zu ermitteln.

3. Vorrichtung nach Anspruch 1, **dadurch gekennzeichnet, dass** die Vorrichtung aus einem dritten Signal der Umfeldsensorik (1) den Startpunkt für den Vergleich bestimmt.

4. Vorrichtung nach Anspruch 2 und 3, **dadurch gekennzeichnet, dass** die Rauschwelle in Abhängigkeit von dem dritten Signal eingestellt wird.

5. Vorrichtung nach einem der vorherigen Ansprüche, **dadurch gekennzeichnet, dass** die Vorrichtung das erste Signal zum Vergleich wenigstens einmal differenziert oder integriert.

6. Vorrichtung nach einem der Ansprüche 1-6, **dadurch gekennzeichnet, dass** das erste Signal selbst zum Vergleich benutzt.

## Claims

1. Device for actuating an actuation system (6) for protecting a pedestrian, **characterized in that** the device is connected to a surroundings sensor system (1) and a contact sensor system (2), wherein the device is configured such that the device compares a first signal of the contact sensor system (2) with a threshold (27), wherein the threshold (27) or the first signal is changed as a function of a second signal of the surroundings sensor system (1), and wherein the actuation system (6) is actuated as a function of the comparison, **in that** the second signal is the relative speed, and **in that** the threshold (27) is changed as a function of time.

2. Device according to Claim 1, **characterized in that** the device compares the first signal with a noise threshold in order to determine a starting point for the comparison.

3. Device according to Claim 1, **characterized in that** the device determines the starting point for the comparison from a third signal of the surroundings sensor system (1).

4. Device according to Claims 2 and 3, **characterized in that** the noise threshold is set as a function of the third signal.

5. Device according to one of the preceding claims, **characterized in that** the device differentiates or integrates the first signal at least once for the comparison.

6. Device according to one of Claims 1 to 6, **characterized in that** the first signal uses itself for the comparison.

## Revendications

1. Dispositif pour actionner un actionneur (6) pour la protection d'un piéton, **caractérisé en ce que** le dispositif est relié avec un dispositif de détection de l'environnement (1) et un dispositif de détection de contact (2), le dispositif étant configuré de telle sorte que le dispositif compare un premier signal du dispositif de détection de contact (2) avec un seuil (27), le seuil (27) ou le premier signal étant modifié en fonction d'un deuxième signal du dispositif de détection de l'environnement (1) et l'actionneur (6) étant actionné en fonction de la comparaison, **en ce que** le deuxième signal est la vitesse relative, **en ce que** le seuil (27) est modifié en fonction du temps.

2. Dispositif selon la revendication 1, **caractérisé en ce que** le dispositif compare le premier signal avec un seuil de bruit afin de déterminer un point de départ pour la comparaison.

3. Dispositif selon la revendication 1, **caractérisé en ce que** le dispositif détermine le point de départ pour la comparaison à partir d'un troisième signal du dispositif de détection de l'environnement (1).

4. Dispositif selon les revendications 2 et 3, **caractérisé en ce que** le seuil de bruit est réglé en fonction du troisième signal.

5. Dispositif selon l'une des revendications précédentes, **caractérisé en ce que** le dispositif différencie ou intègre au moins une fois le premier signal en vue de la comparaison.

6. Dispositif selon l'une des revendications 1 à 6, **caractérisé en ce que** le premier signal lui-même est utilisé pour la comparaison.
